# EUROPEAN PATENT APPLICATION

(11) **EP 4 502 242 A1**
(43) Date of publication of application: **05.02.2025**
(21) Application number: 23778795.7
(22) Date of filing: 26.01.2023
(51) Int. Cl.: C25D 1/04, C22C 19/03, C22C 38/00, H01M 4/66

(54) **ALLOY ELECTROLYTIC FOIL**

(30) Priority: 31.03.2022 JP 2022059253
(71) Applicant: Toyo Kohan Co., Ltd., Tokyo 141-8260 (JP)
(72) Inventor: YOSHIZAKI, Yuma, Kudamatsu-shi Yamaguchi 744-8611 (JP); KAWAMURA, Michio, Kudamatsu-shi Yamaguchi 744-8611 (JP); TSUTSUMI, Etsuro, Kudamatsu-shi Yamaguchi 744-8611 (JP); HORIE, Shinichirou, Kudamatsu-shi Yamaguchi 744-8611 (JP); MATSUSHIGE, Daisuke, Kudamatsu-shi Yamaguchi 744-8611 (JP)
(74) Representative: Hoffmann Eitle
(86) International application number: PCT/JP2023/002437
(87) International publication number: WO 2023/188757

(57) **Abstract**

To provide a metal foil having higher corrosion resistance, thinness, and folding endurance all together.

[Solving Means]

An alloy electrolytic foil made of an iron-and-nickel-base alloy and containing 30 to 500 ppm by weight of manganese in terms of content proportion, and having a thickness of 1.5 to 10.0 µm.

## Description

### [Technical Field]

The present invention relates to an alloy electrolytic foil suitably usable especially as a material for secondary batteries, wiring boards, and the like.

### [Background Art]

Rolled foils and electrolytic foils, which use various metal materials, are conventionally known as materials and the like for battery current collectors and wiring boards.

In the below-listed PTL 1, for example, a stacked resin wiring board using a rolled Fe-Ni base alloy as a core material is disclosed. In PTL 2, a rolled Fe-Cr-Ni alloy foil of a predetermined chemical composition for a resistor in a multilayered board is also disclosed.

In PTL 3, an electrolytic Fe-Ni alloy foil usable as a material and the like for secondary battery current collectors and the like is further disclosed.

### [Citation List]

### [Patent Literature]

[PTL 1]
   Japanese Patent Laid-open No. 2004-031731
[PTL 2]
   Japanese Patent Laid-open No. 2004-225076
[PTL 3]
   PCT Patent Publication No. WO2021/075253

### [Summary]

### [Technical Problem]

For a metal foil to be used as a current collector in a secondary battery, there has been a demand to satisfy both thinness and strength for the realization of a higher capacity for the battery. As fundamental strength, there has been a demand for tensile strength sufficient to withstand deformations of a current collector that occur by expansion and contraction of an active material. Even if the current collector has tensile strength sufficient to prevent deformations or has tensile strength of sustaining only deformations to such an extent as causing no breakage, on the other hand, repeated stresses are applied to the current collector by expansion and contraction of the active material. Especially in the case of a secondary battery using a high-capacity active material as a more stringent battery environment, expansion and contraction of the active material becomes particularly large.

As performance required for a current collector to cope with expansion and contraction of an active material, the present inventors placed a focus on these repeatedly applied stresses and a fatigue caused by the repeated stresses, and found that folding endurance is insufficient with conventional materials.

Accompanied by downsizing of electronic equipment and the like, there has also been a demand for downsizing and higher densification of wiring boards and the like to be mounted on these equipment. For the higher densification of a wiring board or the like, there is a need to accommodate it in a folded state in electronic equipment, so that bendable portions are often disposed. To prevent disconnections by such repeated folding and bending, high folding durability is required for a metal foil to be used as a wiring board.

With a view to solving such a problem, the present invention has as an object thereof the provision of a metal foil having thinness, tensile strength, and folding endurance all together.

### [Solution to Problem]

To solve the above-described problem, an alloy electrolytic foil in an embodiment of the present invention is (1) an alloy electrolytic foil made of an iron-and-nickel-base alloy and containing 30 to 500 ppm by weight of manganese in terms of content proportion, and the alloy electrolytic foil has a thickness of 1.5 to 10.0 um.

In (1) described above, it is preferred that (2) the alloy electrolytic foil further contain 10 ppm by weight or more of sulfur in terms of content proportion, and a ratio (R_{Mn/S}) of the content proportion of manganese to the content proportion of sulfur in the alloy electrolytic foil is 0.2 or greater.

In (1) or (2) described above, it is also preferred that (3) a ratio (R_{Ni/Fe}) of content proportion of the nickel to content proportion of the iron, in terms of % by weight, in the alloy electrolytic foil be 0.6 to 10.0.

In any one of (1) to (3) described above, it is also preferred that (4) a content amount of the iron be 1.3 to 60.0 g/m².

In any one of (1) to (4) described above, it is also preferred that (5) a content amount of the nickel be 5.0 to 81.0 g/m².

In any one of (2) to (5) described above, it is also preferred that (6) the ratio (R_{Mn/S}) of the content proportion of manganese to the content proportion of sulfur be 0.4 or greater.

In any one of (3) to (6) described above, it is also preferred that (7) the ratio (R_{Ni/Fe}) of the content proportion of nickel to the content proportion of iron be 1.0 to 5.0.

In any one of (1) to (7) described above, it is also preferred that (8) a total content proportion of the iron and the nickel in the alloy electrolytic foil be 90% by weight or more.

To solve the above-described problem, a current collector for a battery in the embodiment of the present invention includes the alloy electrolytic foil described in any one (1) to (8).

### [Advantageous Effect of Invention]

According to the present invention, a metal foil, which has thinness and tensile strength and also folding endurance, can be provided.

### [Brief Description of Drawing]

[FIG. 1]

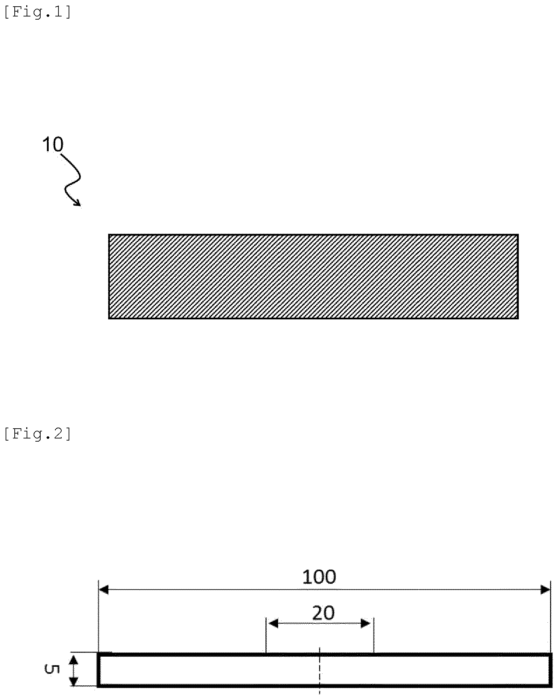

   FIG. 1 is a schematic view of an embodiment of an alloy electrolytic foil of the present invention.
[FIG. 2]
   FIG. 2 is a schematic diagram of a specimen for use in a tensile test in each example.

### [Description of Embodiment]

### <<Alloy electrolytic foil>>

A description will hereinafter be made about an embodiment for carrying out the alloy electrolytic foil of the present invention. FIG. 1 is a view schematically depicting this embodiment of an alloy electrolytic foil 10 of the present invention. The alloy electrolytic foil 10 of the present embodiment is formed by electrolytic plating. Specifically, the alloy electrolytic foil 10 can be formed using an alloy plating bath.

The alloy electrolytic foil 10 of this embodiment is an electrolytic foil made of an alloy that contains iron (Fe), nickel (Ni), and manganese (Mn).

In this embodiment, the alloy electrolytic foil 10 contains an iron-and-nickel-base alloy. Now, the iron-and-nickel-base alloy will hereinafter be also called an "iron-nickel alloy" or "Fe-Ni alloy." It is to be noted that, as the state of this iron-nickel alloy, any of a solid solution, eutectoid/eutectic, or compound (intermetallic compound) may be mentioned, or these states may exist together. Because of containing the iron-and-nickel-base alloy, the alloy electrolytic foil 10 can have strength despite its small thickness, and also corrosion resistance.

It is to be noted that the alloy electrolytic foil 10 of this embodiment is characterized by containing manganese (Mn) in a content proportion of 30 to 500 ppm by weight to improve its folding endurance. As a reason for this, the control of the content proportion of manganese to the above-described range is preferred because it significantly contributes to the below-mentioned improvement in folding endurance. It is to be noted that 80 to 500 ppm by weight is more preferred, and 250 to 500 ppm by weight is still more preferred. It is to be noted that, as a method for measuring the content proportion of manganese in the alloy electrolytic foil 10, inductively coupled plasma mass spectrometry (ICP-MS) is used in the present invention. Without being limited to this, however, other measurement methods include ICP emission spectroscopy, glow discharge mass spectrometry (GD-MS), and the like.

A description will hereinafter be made about folding endurance required for the alloy electrolytic foil 10 of this embodiment. If the alloy electrolytic foil 10 is used as a current collector, it is important for the current collector to suppress degradation by repeated stresses associated with expansion and contraction of an active material and a fatigue caused by the repeated stresses. Especially in the case of a secondary battery using a high-capacity active material as more stringent battery conditions, the expansion and contraction of the active material becomes particularly large, leading to a possibility that a fatigue build-up and load on the collector may increase due to repeated stresses associated with the expansion and contraction, and foil ripping may occur.

Here, as a method that repeatedly conducts folding and bending on a sheet of paper and evaluates its folding endurance until rupture, a Massachusetts Institute of Technology (MIT) test is known. With a focus placed on simulative reproducibility of the above-described fatigue by repeated stresses in the battery by the MIT test, the inventors of the present application used the MIT test for the evaluation of folding endurance. It was then found that, even among materials having similar degrees of tensile strength and elongation, they, as alloy electrolytic foils 10 of this embodiment, differ in superiority from the viewpoint of folding endurance. The alloy electrolytic foil 10 of this embodiment can suppress degradation by a fatigue owing to the possession of excellent folding endurance.

It is to be noted that an MIT test is generally used to evaluate the strength of paper, a thin film, or the like against folding or its durability upon application of repeated stresses in an MIT test compliant with Japanese Industrial Standard (JIS) P 8115:2001. Concerning the alloy electrolytic foil 10 of this embodiment, the conduct of an evaluation of its folding endurance by this MIT test makes it possible to confirm whether or not it is provided with folding endurance as required.

Higher folding endurance is required especially if used as a current collector for a battery as mentioned above. It is therefore preferred for the alloy electrolytic foil 10 of this embodiment to have a fold number of 400 or greater under the following measurement conditions that are particularly severe in measurement conditions for MIT tests. It is to be noted that the term "fold number" as used herein means the number of reciprocating folds until a specimen ruptures.

### <Measurement conditions for MIT test>

Testing speed: 175 cpm
Folding angle: 135°
Load: 0.1 kgf
Tip roundness R of chuck: 0.38 mm

Further, the evaluation of folding endurance was conducted with a specimen size of 15 × 100 mm.

By confirming the fold number under such severe measurement conditions as described above, a material can be verified to be excellent in folding endurance and to be able to withstand a more stringent battery environment.

In the alloy electrolytic foil 10 of this embodiment, the fold number is preferably 400 or greater, and to provide still better folding endurance against repeated stresses caused by expansion and contraction of the active material, the fold number is more preferably 500 or greater, with 600 or greater being particularly preferred.

If iron and nickel amount to 25% by weight and 75% by weight, respectively, in an alloy such as an iron-nickel alloy prepared by electroplating, an order structure based on an A₃B-type (for example, L1₂-type) Ni₃Fe intermetallic compound is conceivable from its equilibrium state diagram. In addition, a characteristic feature that the Ni₃Fe phase has not only a stoichiometric composition but also a composition width is also observed. If iron amounts to 50% by weight and nickel amounts to 50% by weight, on the other hand, the alloy has a significantly small diffusion coefficient, and therefore does not appear as a phase on its equilibrium state diagram. Nonetheless, the alloy is conceivable to take an order structure based on an L1₀-type FeNi intermetallic compound of the AB-type. The range of this investigation is therefore inferred to encompass single phases of the above-described Ni₃Fe and FeNi, or their composite state.

These intermetallic compounds are considered to include periodic stress fields in their structures for the differences in atomic radius among their constituent atoms. Further, if a phase is formed with a composition deviated from a stoichiometric composition, point defects such as atom substitutions into disordered positions and voids occur, and as a result, a strain included in the metal structure becomes still greater. The addition of manganese to the above-described composition induces filling to the strongly strained void positions, and also induces substitution for iron and nickel, so that relaxation of included strain fields is considered to be promoted to stabilize the crystal structure. Therefore, the folding endurance is postulated to be improved by the structural stabilization.

It is to be noted that the alloy electrolytic foil 10 of this embodiment may contain other metal elements and inevitable impurities insofar as the problem of the present invention can be solved. For example, metal elements such as cobalt (Co), molybdenum (Mo), and the like, and an additive element such as boron (B) and the like may be contained. It is also to be noted that the proportions of metal elements other than iron, nickel, and manganese in the alloy electrolytic foil 10 are preferably 10% by weight or less in total.

In other words, the total content proportion of iron and nickel in the alloy electrolytic foil 10 of this embodiment is preferably 90% by weight or more. This is to satisfy strength and corrosion resistance when the alloy electrolytic foil 10 is used as a current collector material for secondary batteries. It is to be noted that the total content proportion of iron and nickel is more preferably 95% by weight or more, still more preferably 99% by weight or more. It is also to be noted that, as "the total content proportion of iron and nickel" as used herein, the total content amount (g/m²) of iron and nickel was measured using ICP emission spectroscopy or the like, which will be mentioned subsequently herein, or the like, and the total content proportion of iron and nickel was calculated by dividing the total content amount with the weight of the alloy electrolytic foil 10.

It is to be noted that the lower limit of the content proportion of other metal elements without inevitable impurities is 0% by weight as the alloy electrolytic foil 10 may substantially be an alloy constituted of iron, nickel, and manganese only. It is also to be noted that the kinds and amounts of the contained other metal elements can be determined by conducting the above-mentioned ICP emission spectroscopy, but without being limited to this method, can be also measured by known means such as an X-ray fluorescence (XRF) spectrometer, GDS (glow discharge optical emission spectroscopy), or the like.

Assuming that the total of the content amounts (weights) of the metal components of iron and nickel contained in the alloy electrolytic foil 10 is 100%, the proportion of iron is preferably 10% by weight to 60% by weight in the alloy electrolytic foil 10 of this embodiment. On the other hand, the content proportion of nickel is preferably 40% by weight to 90% by weight.

Further, the proportion of iron is more preferably 25% by weight to 60% by weight, with 25% by weight to 50% by weight being particularly preferred, if the total of the content amounts (weights) of the metal components of iron and nickel contained in the alloy electrolytic foil 10 is 100%. On the other hand, the content proportion of nickel contained in the alloy electrolytic foil 10 is more preferably 40% by weight to 75% by weight, with 50% by weight to 75% by weight being particularly preferred.

The control of the proportion of iron to the above-described range is preferred from the viewpoint of plating stress at the time of production and the viewpoint of folding endurance. On the other hand, the control of the proportion of nickel to the above-described range is preferred from the viewpoints of available corrosion resistance and tensile strength.

It is to be noted that, in the above-described calculation method of the proportions of iron and nickel, the amounts of iron and nickel can be determined using the below-mentioned ICP emission spectroscopy, but without being limited to this method, another known measurement method can be also used.

In the alloy electrolytic foil 10 in this embodiment, the ratio (R_{Ni/Fe}) of the content proportion of nickel to the content proportion of iron preferably falls in a range of 0.6 to 10.0 from the viewpoints of corrosion resistance and folding endurance. It is to be noted that, to further improve the folding endurance of the alloy electrolytic foil 10, the content proportion ratio (R_{Ni/Fe}) is more preferably 0.6 to 5.0, still more preferably 0.6 to 3.0, particularly preferably 1.0 to 2.5. From the viewpoint of further improving the folding endurance of the alloy electrolytic foil 10 and the viewpoint of cost, the setting of the above-described ratio (R_{Ni/Fe}) to the range of 1.0 to 2.5 is particularly preferred.

It is to be noted that, as "the content proportion of iron and the content proportion of nickel" as used herein, the respective content amounts (g/m²) of iron and nickel were measured using ICP emission spectroscopy, which will be mentioned subsequently herein, or the like, and the content proportion of iron and the content proportion of nickel were calculated, respectively, by dividing the content amounts with the weight of the alloy electrolytic foil 10.

When the alloy electrolytic foil 10 of this embodiment is used as a current collector material for a secondary battery, the alloy electrolytic foil 10 is generally embedded in a stacked configuration or a wound configuration in a battery case. For suitably controlling the handling properties and tensile strength at the time of manufacture of such batteries, it is preferred to set the ratio (R_{Ni/Fe}) of the content proportion of nickel to the content proportion of iron to the above-described range. Further, organic solvent electrolytes with a lithium salt or the like contained therein, high alkali solutions, and the like are used, and in all solid batteries and the like, sulfur compounds, strong oxides, and the like can be used. For imparting corrosion resistance to such strongly corrosive substances, it is preferred to set the ratio (R_{Ni/Fe}) of the content proportion of nickel to the content proportion of iron to the above-described range.

The thickness of the alloy electrolytic foil 10 of this embodiment is 1.5 to 10.0 um. By setting the thickness to this range, it is possible to realize flexibility or the like required when the alloy electrolytic foil 10 is applied as a current collector in a battery or as a wiring board. If the alloy electrolytic foil 10 is used as a current collector in a secondary battery, it is also possible to realize providing the battery with a high capacity.

If the thickness of the alloy electrolytic foil 10 exceeds 10 um, a design concept is not met from a background that a higher capacity is aimed by a thickness reduction, and moreover a cost advantage is diminished relative to known rolled foils and the like. With a thickness of smaller than 1.5 um, on the other hand, there is not only a difficulty in having sufficient strength against effects associated with charging and discharging, but also a problem of a higher possibility of occurrence of rupture, ripping, wrinkling, and the like upon manufacture of batteries, handling, and the like.

It is to be noted that, as the thickness of the alloy electrolytic foil 10 in this embodiment, a thickness measured by a micrometer can be adopted.

In the alloy electrolytic foil 10 in this embodiment, the content amount of iron is preferably 1.3 to 60.0 g/m². This is because preferred strength can be imparted to a thin alloy electrolytic foil 10 having the below-mentioned thickness. It is to be noted that the content amount of iron is more preferably 5.0 to 60.0 g/m², still more preferably 7.5 to 51.0 g/m². By setting the content amount of iron to the above-described range, the alloy electrolytic foil 10 can be suitably set to the above-mentioned ranges of thickness, iron proportion, and the like.

The above-mentioned content amount of iron can be determined by dissolving the alloy electrolytic foil 10 and conducting ICP emission spectroscopy, but without being limited to this method, another known measurement method can also be used.

On the other hand, the content amount of nickel is preferably 5.0 to 81.0 g/m² in the alloy electrolytic foil 10 in this embodiment. This is because preferred corrosion resistance can be imparted to the alloy electrolytic foil 10. It is to be noted that the content amount of nickel is more preferably 5.0 to 72.0 g/m², still more preferably 8.9 to 55.0 g/m². By setting the content amount of nickel to the above-described range, the alloy electrolytic foil 10 can be suitably set to the above-mentioned ranges of thickness, nickel proportion, and the like.

It is to be noted that, similarly to the content amount of iron, the content amount of nickel can also be determined by dissolving the alloy electrolytic foil 10 and conducting ICP emission spectroscopy, but without being limited to this method, another known measurement method can be also used.

The alloy electrolytic foil 10 of this embodiment preferably contains sulfur (S) as an additive element. It has been found that, in the alloy electrolytic foil 10 of this embodiment, the above-mentioned ratio of a content amount of sulfur to a content amount of manganese affects the required folding endurance. It is to be noted that, in the present invention, glow discharge mass spectrometry (GD-MS) is used as a method for measuring the content proportion of sulfur contained in the alloy electrolytic foil 10, but without being limited to this method, radio frequency glow discharge optical emission spectroscopy (GDS) or the like is also mentioned as another measurement method.

Described specifically, in the alloy electrolytic foil 10 of this embodiment, the content proportion of sulfur in the alloy electrolytic foil 10 is preferably 10 to 600 ppm by weight, with 30 to 400 ppm by weight being more preferred. This content proportion of sulfur can improve the folding endurance, and is hence preferred. It is to be noted that, if the content proportion of sulfur exceeds 600 ppm by weight as its upper limit, such an excessive content proportion of sulfur not only leads to saturation of the improving effect for folding endurance, but also has a possibility of affecting the folding endurance available from containing manganese.

Further, the ratio (R_{Mn/S}) of the content proportion of manganese to the content proportion of sulfur in the alloy electrolytic foil 10 is preferably 0.2 or greater. If the content proportion of manganese is 40 ppm by weight and the content proportion of sulfur is 200 ppm by weight in the alloy electrolytic foil 10, for example, the ratio (R_{Mn/S}) is determined to be 0.2.

Furthermore, it is preferred from the viewpoint of the available folding endurance that the above-described ratio (R_{Mn/S}) of the content proportion of manganese to the content proportion of sulfur is more preferably 0.4 or greater, still more preferably 0.7 or greater, particularly preferably 0.8 or greater. As the upper limit of the above-described ratio (R_{Mn/S}), on the other hand, 5.0 is preferred. By setting the ratio (R_{Mn/S}) to the above-described range, a further improvement in folding endurance can be expected by a synergistic effect of manganese and sulfur.

### (Tensile strength)

The alloy electrolytic foil 10 of this embodiment preferably has a tensile strength of 720 MPa or higher. If the tensile strength of the alloy electrolytic foil 10 is lower than the above-described value, there is a possibility that, at the time of manufacture of batteries, ripping, rupture, and the like of the foil may occur, and handling properties are lowered. Such a low tensile strength is hence not preferred. When applied as a current collector for a secondary battery, there is also a possibility that the alloy electrolytic foil 10 cannot follow volume expansion by repeated charging and discharging and rupture may occur, and this is not preferred. Although no particular limitation is imposed on the upper limit of the tensile strength of the alloy electrolytic foil 10, 2000 MPa or lower is preferred from the viewpoint of providing the below-mentioned elongation.

### (Elongation)

The alloy electrolytic foil 10 of this embodiment preferably has an elongation of 0.5% to 5.0% from the viewpoint that it follows volume expansion by repeated charging and discharging when applied as a current collector in a secondary battery. It is to be noted that the elongation of the alloy electrolytic foil 10 in this embodiment can be a value measured following JIS Z2241 (Tensile Testing Method for Metal Materials).

### <<Current collector>>

A current collector in this embodiment may be the above-mentioned alloy electrolytic foil 10 itself.

The collector in this embodiment may additionally include a metal layer that is formed on the above-described alloy electrolytic foil 10. As metal materials that constitute the above-described metal layer, examples include nickel, chromium, copper, cobalt, iron, and the like. Of these, nickel or a nickel alloy is particularly preferred for its excellent corrosion resistance and strength.

Further, the current collector in this embodiment may include a roughened nickel layer on an outermost surface of either one side of the above-described alloy electrolytic foil 10. It is to be noted that the above-mentioned metal layer may be the roughened nickel layer or the roughened nickel layer may be formed on the above-mentioned metal layer. Details about the roughened nickel layer are omitted, as it is described, for example, in an application (WO2021/020338 A1 etc.) by the present applicant.

### <<Production method of alloy electrolytic foil>>

An example of a production method of the alloy electrolytic foil 10 of this embodiment will hereinafter be described. As the production method of the alloy electrolytic foil 10 of this embodiment, it can be generally produced by a method that includes forming an alloy plating layer on a support substrate, and then peeling it.

Described specifically, pretreatment such as polishing, wiping, water rinsing, degreasing, and pickling is first applied to the support substrate on which the alloy plating layer is to be formed. As a specific material of the support substrate, a titanium sheet or a stainless steel sheet can be used, but without being limited to this, another known metal material can be also used insofar as not departing from the spirit of the present invention.

The support substrate may be subjected at a surface thereof to polishing such that the surface roughness or the like of the resulting alloy electrolytic foil 10 is set to a desired value. Described specifically, the surface profile of the support substrate is substantially transferred to a surface (also called a "base material surface") of the alloy plating layer, the surface being on a side of the support substrate, when the alloy plating layer is formed on the support substrate. In addition, the profile of the opposite side (also called an "electrolytic surface") of the alloy electrolytic foil 10 has a possibility that the surface profile of the support substrate is reflected more as the thickness of the alloy electrolytic foil 10 decreases. Polishing of the surface of the support substrate is therefore effective to set the surface roughness or the like of the alloy electrolytic foil 10 to the desired value.

The polishing of the surface of the support substrate can be performed using known means. Further, no particular limitation is imposed on the polishing direction, so that the polishing may be performed in a specific direction such as a width direction, a length direction, or the like of the support substrate, or may be performed in random directions.

The support substrate subjected to the pretreatment is dipped in an alloy plating bath to be exemplified hereinafter, and an alloy plating layer can be formed on the support substrate.

### <Example of alloy plating conditions>

- Bath formula
   Nickel sulfate hexahydrate: 150 to 250 g/L
   Iron sulfate heptahydrate: 5 to 100 g/L
   Manganese chloride tetrahydrate: 1 to 100 g/L
   Boric acid: 20 to 50 g/L
   Sodium citrate (or trisodium citrate): 1 to 15 g/L
   Saccharin sodium: 1 to 10 g/L
- Temperature: 25°C to 95°C
- pH: 2 to 4
- Agitation: air agitation or jet agitation
- Current density: 5 to 50 A/dm²

It is to be noted that, concerning the above-described temperature of the bath, a temperature lower than 25°C is not preferred as the roughness of the foil becomes significantly high. Further, a temperature lower than 25°C is not preferred because of a possibility that no layer can be formed or a possibility that manganese is hardly contained in the foil and the required folding endurance is not obtained accordingly. On the other hand, a temperature higher than 95°C is not also preferred as the roughness of the foil becomes high. Further, a temperature of higher than 95°C is not preferred because tensile strength cannot be assured for the resulting layer.

If the pH of the bath is lower than 2, the roughness of the foil becomes significantly high. Such a low pH is therefore not preferred. Further, such a low pH is not preferred because the deposition efficiency of the plating is lowered. On the other hand, a pH of higher than 4 provides the foil with a high roughness, and is not preferred accordingly. Further, such a high pH is not preferred because sludge may be mixed into the resulting layer.

Concerning the current density, a current density lower than 5 A/dm² is not preferred because the roughness of the foil becomes high. Further, such a low current density is not preferred because the production efficiency may be lowered. A current density higher than 50 A/dm² is not preferred, because there is a possibility that a plating burning may be formed.

In the above-mentioned example of the formula of the alloy plating bath, saccharin sodium (C₇H₅NO₃SNa) is contained as a gloss agent. The production method in this embodiment is not limited to this, but a sulfur (S)-containing gloss agent other than saccharin sodium may also be used, or a gloss agent free of sulfur (S) may also be used.

Moreover, an anti-pitting agent may also be added in an appropriate amount to the plating bath.

The alloy electrolytic foil 10 can be obtained by drying the alloy plating layer formed on the support substrate, and then peeling it. It is to be noted that, before the peeling or after the peeling from the support substrate, roughening treatment, rust-preventive treatment, and/or the like may be applied to the surface of the outermost surface layer of the alloy electrolytic foil 10 to such an extent that the object of the present invention can be achieved. Alternatively, known treatment for imparting electrical conductivity, such as carbon coating, may also be applied.

The surface of the alloy electrolytic foil 10 may be provided with desired three-dimensional surface properties by a smoothing method through etching treatment, electrolytic polishing, or the like.

It is to be noted that the above-mentioned production method of the alloy electrolytic foil 10 of this embodiment is exemplified as alloy plating conducted by a method (for example, the drum method or roll-to-roll method) that performs continuous production using a support substrate. Without being limited to this, however, a batchwise production method using, for example, cut sheets can be also applied.

### <<Examples>>

The present invention will hereinafter be described more specifically by giving examples. A description will first be made about measurement methods in the examples.

### [Measurement methods of content amounts and content proportions of iron (Fe) and/or nickel (Ni)]

Each alloy electrolytic foil obtained was dissolved, followed by ICP emission spectroscopy (measurement instrument: inductively coupled plasma emission spectrometer "ICPE-9000", manufactured by Shimadzu Corporation) to measure the respective content amounts of iron and nickel. The results are presented in Table 1. It is to be noted that the proportions of iron and nickel as presented in Table 1 are the proportions based on the total amount of the content amounts (g/m²) of iron and nickel. On the other hand, the total content proportion of iron and nickel was calculated by dividing the total content amount(g/m²) of iron and nickel with the weight of the alloy electrolytic foil. In the ratio (R_{Ni/Fe}) of the content proportions of iron and nickel as presented in Table 1, the content proportions (% by weight) were calculated by dividing the respective content amounts of iron and nickel with the weight of the alloy electrolytic foil, and the ratio of their content proportions of iron and nickel was determined from the content proportions so obtained.

### [Measurement method of content proportion of manganese (Mn)]

The weight of each alloy electrolytic foil obtained was measured beforehand, followed by dissolution of the alloy electrolytic foil. The content amount of manganese was then measured by inductively coupled plasma mass spectrometry (measurement instrument: "Agilent 8900 Triple Quadrupole ICP-MS," manufactured by Agilent Technologies, Inc.). The content proportion (ppm by weight) of manganese was calculated by dividing the content amount of manganese with the weight of the alloy electrolytic foil as measured beforehand. As measurement conditions, the measurement was conducted using a quantitative analysis as a measurement mode, and an argon gas as a carrier gas. The result is presented in Table 1. It is to be noted that the content proportion of manganese as presented in Table 1 is the content proportion of manganese in the alloy electrolytic foil.

### [Measurement method of content proportion of sulfur (S)]

Each alloy electrolytic foil obtained was fixed in a flat cell, the strength of sulfur relative to the ionic strengths of iron and nickel as principal constituent elements was measured by glow discharge mass spectrometry (measurement instrument: "Astrum GD-MS," manufactured by Nu Instruments Ltd.), and the content proportion (ppm by weight) of sulfur was then measured using relative sensitivity factors. As measurement conditions, the measurement was conducted using a flat cell as a measurement method, 10ϕ as a measurement range, and an argon gas as a discharge gas species. The result is presented in Table 1. It is to be noted that the content proportion of sulfur as presented in Table 1 is the content proportion of sulfur in the alloy electrolytic foil.

### [Measurements of tensile strength and elongation]

Concerning each electrolytic foil obtained, measurements of its tensile strength and elongation were conducted as will be described hereinafter. It is to be noted that the term "elongation" as used herein indicates an elongation at break. Cutting of the metal piece into a strip shape having a size of 5 × 100 mm was first conducted by a cutter. On that specimen, a tensile test was conducted following JIS Z 2241 that is a JIS standard of a tensile test method for metal materials. A schematic diagram of the specimen is depicted in FIG. 2.

It is to be noted that, as an instrument for the tensile test, a tensile tester ("Shimadzu Precision Universal Testing Machine Autograph AGX-V") was used. As measurement conditions, the tensile test was conducted under conditions of room temperature and 1 mm/min pull rate.

Concerning the measurement of the elongation, a measurement of the distance of a movement between measuring points was conducted using a non-contact video extensometer ("TRViewX"), and the calculation of the elongation was conducted in accordance with the below-described formula. Further, the distance between initial measuring points was set to 20 mm. (Distance of movement (displacement) between measuring points) / (distance between initial measuring points) × 100

The results are presented in Table 2.

### [Measurement of thickness]

Concerning each electrolytic foil obtained, a measurement of its thickness was conducted using a micrometer. The value so obtained is presented in Table 1.

### [Folding endurance evaluation (MIT test)]

Following JIS P 8115, the folding endurance and flexural strength of each alloy electrolytic foil was measured under 23°C atmosphere. Described specifically, using an MIT folding endurance tester "BE-202" manufactured by TESTER SANGYO CO., LTD., a folding endurance and flexural strength measurement was conducted at a testing speed of 175 cpm, a folding angle of 135°, and a load of 0.1 kgf, and the number until the alloy electrolytic foil ruptured was determined. The tip roundness R of a chuck was set to 0.38 mm, and the size of a specimen was set to 15 × 100 mm. The result is presented in Table 2.

### <Example 1>

A manganese-containing, iron-nickel alloy plating was formed on a support substrate. Described specifically, as the support substrate on an upper surface of which an alloy electrolytic foil was to be formed, a titanium material was used. Polishing was performed to a surface of the titanium material to set the surface roughness Ra of the titanium material to the value in Table 1. To the titanium material, known pretreatment such as pickling and water rinsing was applied using 7 wt% sulfuric acid. The pretreated titanium material was then dipped and subjected to electrolytic deposition in an alloy plating bath presented below, whereby an electrolytic alloy plating layer was formed on the titanium material. Next, after the electrolytic alloy plating layer formed as described above was sufficiently dried, the plating layer was peeled from the titanium material to obtain the alloy electrolytic foil.

### [Alloy plating conditions]

- Bath formula
   Nickel (II) sulfate hexahydrate: 230 g/L
   Iron (II) sulfate heptahydrate: 20 g/L
   Mn ions: 30 mmol/L
   Boric acid: 30 g/L
   Saccharin sodium: 5 g/L
   Trisodium citrate: 10 g/L
- Temperature: 80°C ± 5
- pH: 2.4
- Agitation: air agitation
- Current density: 20 A/dm²

The thickness of the alloy electrolytic foil so obtained, the iron content amount and nickel content amount in the alloy electrolytic foil, the proportions of iron and nickel, the tensile strength, the elongation, and the folding endurance were as presented in Tables 1 and 2. To determine those content amounts, the alloy electrolytic foil of Example 1 was dissolved, followed by measurements of the iron content amount and nickel content amount by ICP emission spectroscopy.

It is to be noted that the total content proportion of iron and nickel in the alloy electrolytic foil was 99.9% by weight or more, and the content proportion of other elements was less than 0.1% by weight. Further, the content proportions of manganese and sulfur in the alloy electrolytic foil were 90 ppm by weight (manganese) and 65 ppm by weight (sulfur). The measurement of the content proportion of manganese was conducted by inductively coupled plasma mass spectrometry. On the other hand, the measurement of the sulfur content proportion was conducted by glow discharge mass spectrometry.

### <Example 2>

Alloy plating conditions were set as follows.

### [Alloy plating conditions]

- Bath formula
   Nickel (II) sulfate hexahydrate: 235 g/L
   Iron (II) sulfate heptahydrate: 60 g/L
   Mn ions: 30 mmol/L
   Boric acid: 30 g/L
   Saccharin sodium: 5 g/L
   Trisodium citrate: 10 g/L
- Temperature: 80°C ± 5
- pH: 2.4
- Agitation: air agitation
- Current density: 30 A/dm²

Except for the alloy plating conditions, alloy plating was performed as in Example 1. It is to be noted that the total content proportion of iron and nickel in an alloy electrolytic foil was 99.9% by weight or more, and the content proportion of other elements was less than 0.1% by weight. The results are presented in Tables 1 and 2.

### <Example 3>

Except that the thickness of an alloy electrolytic foil was set to the configuration described in Table 1, alloy plating was performed as in Example 3. The results are presented in Tables 1 and 2.

### <Example 4>

Alloy plating conditions were set as follows.

### [Alloy plating conditions]

- Bath formula
   Nickel (II) sulfate hexahydrate: 240 g/L
   Iron (II) sulfate heptahydrate: 80 g/L
   Mn ions: 4 mmol/L
   Boric acid: 30 g/L
   Saccharin sodium: 5 g/L
   Trisodium citrate: 10 g/L
- Temperature: 80°C ± 5
- pH: 2.4
- Agitation: air agitation
- Current density: 30 A/dm²

Except for the alloy plating conditions, alloy plating was performed as in Example 1. The total content proportion of iron and nickel in an alloy electrolytic foil was 99.9% by weight or more, and the content proportion of other elements was less than 0.1% by weight. The results are presented in Tables 1 and 2.

### <Example 5>

Except that, in the alloy plating conditions of Example 4, Mn ions were set to 30 mmol/L and the thickness of an alloy electrolytic foil was set to the configuration described in Table 1, alloy plating was performed as in Example 4. The results are presented in Tables 1 and 2.

### <Example 6>

Except that, in the alloy plating conditions of Example 4, Mn ions were set to 30 mmol/L, alloy plating was performed as in Example 4. The results are presented in Tables 1 and 2.

### <Example 7>

Except that, in the alloy plating conditions of Example 4, Mn ions were set to 30 mmol/L and the thickness of an alloy electrolytic foil was set to the configuration described in Table 1, alloy plating was performed as in Example 4. The results are presented in Tables 1 and 2.

### <Example 8>

Except that, in the alloy plating conditions of Example 4, Mn ions were set to 52 mmol/L, alloy plating was performed as in Example 4. The results are presented in Tables 1 and 2.

### <Example 9>

Except that, in the alloy plating conditions of Example 4, Mn ions were set to 98 mmol/L, and the current density was set to 20 A/dm², alloy plating was performed as in Example 4. The results are presented in Tables 1 and 2.

### <Example 10>

Except that, in the alloy plating conditions of Example 4, Mn ions were set to 30 mmol/L, and the surface roughness Ra of the titanium material was set to the value in Table 1, alloy plating was performed as in Example 4. The results are presented in Tables 1 and 2.

### <Example 11>

Except that, in the alloy plating conditions of Example 4, Mn ions were set to 52 mmol/L, and the surface roughness Ra of the titanium material was set to the value in Table 1, alloy plating was performed as in Example 4. The results are presented in Tables 1 and 2.

### <Comparative Example 1>

Alloy plating conditions were set as follows.

### [Alloy plating conditions]

- Bath formula
   Nickel (II) sulfate hexahydrate: 230 g/L
   Iron (II) sulfate heptahydrate: 20 g/L
   Nickel (II) chloride hexahydrate: 45 g/L
   Boric acid: 30 g/L
   Saccharin sodium: 5 g/L
   Trisodium citrate: 10 g/L
- Temperature: 60°C ± 5
- pH: 2.4
- Agitation: air agitation
- Current density: 20 A/dm²

Except for the alloy plating conditions, alloy plating was performed as in Example 1. The results are presented in Tables 1 and 2.

### <Comparative Example 2>

Alloy plating was performed as in Comparative Example 1 except that the alloy plating conditions were changed to nickel (II) sulfate hexahydrate: 200 g/L, iron (II) sulfate heptahydrate: 50 g/L, and current density: 30 A/dm². The results are presented in Tables 1 and 2.

### <Comparative Example 3>

Alloy plating was performed as in Comparative Example 2 except that the surface roughness Ra of the titanium material was set to the value in Table 1, and the thickness of an electrolytic alloy plating layer was set to the value described in Table 1. The results are presented in Tables 1 and 2.

**[Table 1]**

| | SURFACE ROUGHNESS Ra OF BASE MATERIAL [µm] | ALLOY ELECTROLYTIC FOIL | | | | | | | | | | |
|---|---|---|---|---|---|---|---|---|---|---|---|---|
| | | THICKNESS [µm] | METAL COMPONENTS | CONTENT AMOUNT | | RATIO TO TOTAL Fe+Ni AMOUNT | | TOTAL CONTENT PROPORTION OF Fe AND Ni IN ALLOY ELECTROLYTIC FOIL | Mn CONTENT PROPORTION IN ALLOY ELECTROLYTIC FOIL | S CONTENT PROPORTION IN ALLOY ELECTROLYTIC FOIL | R_{Ni/Fe} | R_{Mn/S} |
| | | | | Fe [g/m²] | Ni [g/m²] | Fe [wt%] | Ni [wt%] | Fe+Ni [wt%] | [wt ppm] | [wt ppm] | | |
| EX. 1 | 0.2 | 6.0 | Fe,Ni,Mn | 6.2 | 45.7 | 12 | 88 | 99.9≦ | 90 | 65 | 7.3 | 1.4 |
| EX. 2 | 0.2 | 6.1 | Fe,Ni,Mn | 13.3 | 34.2 | 28 | 72 | 99.9≦ | 440 | 150 | 2.6 | 2.9 |
| EX. 3 | 0.2 | 9.8 | Fe,Ni,Mn | 25.5 | 56.5 | 31 | 69 | 99.9≦ | 400 | 200 | 2.2 | 2.0 |
| EX. 4 | 0.2 | 6.1 | Fe,Ni,Mn | 20.0 | 27.6 | 42 | 58 | 99.9≦ | 67 | 250 | 1.4 | 0.3 |
| EX. 5 | 0.2 | 4.1 | Fe,Ni,Mn | 13.0 | 18.7 | 41 | 59 | 99.9≦ | 370 | 240 | 1.4 | 1.5 |
| EX. 6 | 0.2 | 6.1 | Fe,Ni,Mn | 21.9 | 25.7 | 46 | 54 | 99.9≦ | 390 | 240 | 1.2 | 1.6 |
| EX. 7 | 0.2 | 9.9 | Fe,Ni,Mn | 31.4 | 45.2 | 41 | 59 | 99.9≦ | 360 | 270 | 1.4 | 1.3 |
| EX. 8 | 0.2 | 5.9 | Fe,Ni,Mn | 20.1 | 27.4 | 42 | 58 | 99.9≦ | 240 | 300 | 1.4 | 0.8 |
| EX. 9 | 0.2 | 5.9 | Fe,Ni,Mn | 20.1 | 26.0 | 44 | 56 | 99.9≦ | 170 | 250 | 1.3 | 0.7 |
| EX. 10 | 0.1 | 6.0 | Fe,Ni,Mn | 19.5 | 25.5 | 43 | 57 | 99.9≦ | 265 | 310 | 1.3 | 0.9 |
| EX. 11 | 0.1 | 5.8 | Fe,Ni,Mn | 15.3 | 29.7 | 34 | 66 | 99.9≦ | 163 | 300 | 1.9 | 0.5 |
| COMP. EX. 1 | 0.2 | 5.8 | Fe,Ni | 5.3 | 46.7 | 10 | 90 | 99.9≦ | - | 410 | - | - |
| COMP. EX. 2 | 0.2 | 6.0 | Fe,Ni | 18.9 | 28.7 | 40 | 60 | 99.9≦ | - | 280 | - | - |
| COMP. EX. 3 | 0.1 | 6.2 | Fe,Ni | 17.6 | 30.0 | 37 | 63 | 99.9≦ | - | 280 | - | - |

**[Table 2]**

| | TENSILE STRENGTH [Mpa] | ELONGATION [%] | FOLDING ENDURANCE [FOLD NUMBER] |
|---|---|---|---|
| EX. 1 | 1627 | 3.21 | 654 |
| EX. 2 | 1584 | 2.52 | 718 |
| EX. 3 | 1719 | 2.63 | 682 |
| EX. 4 | 1479 | 1.48 | 488 |
| EX. 5 | 1417 | 1.75 | 763 |
| EX. 6 | 1580 | 2.46 | 761 |
| EX. 7 | 1521 | 2.59 | 713 |
| EX. 8 | 1534 | 2.02 | 643 |
| EX. 9 | 1638 | 2.32 | 566 |
| EX. 10 | 1334 | 1.46 | 684 |
| EX. 11 | 1222 | 1.14 | 545 |
| COMP. EX. 1 | 1566 | 2.27 | 216 |
| COMP. EX. 2 | 1602 | 2.56 | 285 |
| COMP. EX. 3 | 1506 | 2.50 | 279 |

According to the foregoing examples and comparative examples, it has been demonstrated that high folding endurance can be obtained despite a small thickness owing to the incorporation of manganese in the alloy electrolytic foil produced in each example and made of the iron-and-nickel-base alloy.

On the other hand, it has been demonstrated that the manganese-free, iron-nickel alloy electrolytic foil of each comparative example cannot obtain the required folding endurance in a similar thickness range as in the above-described examples.

### [Industrial Applicability]

The alloy electrolytic foil of the present invention can be used in a wide field of industries such as motor vehicles and electronic equipment in addition to current collector materials for secondary batteries.

### [Reference Signs List]

10: Alloy electrolytic foil

## Claims

1. An alloy electrolytic foil made of an iron-and-nickel-base alloy, comprising:
30 to 500 ppm by weight of manganese in terms of content proportion,
wherein the alloy electrolytic foil has a thickness of 1.5 to 10.0 um.

2. The alloy electrolytic foil according to claim 1, further comprising:
10 ppm by weight or more of sulfur in terms of content proportion,
wherein a ratio (R_{Mn/S}) of the content proportion of manganese to the content proportion of sulfur in the alloy electrolytic foil is 0.2 or greater.

3. The alloy electrolytic foil according to claim 1 or 2, wherein a ratio (R_{Ni/Fe}) of content proportion of the nickel to content proportion of the iron, in terms of % by weight, in the alloy electrolytic foil is 0.6 to 10.0.

4. The alloy electrolytic foil according to any one of claims 1 to 3, wherein a content amount of the iron is 1.3 to 60.0 g/m².

5. The alloy electrolytic foil according to any one of claims 1 to 4, wherein a content amount of the nickel is 5.0 to 81.0 g/m².

6. The alloy electrolytic foil according to claim 2, wherein the ratio (R_{Mn/S}) of the content proportion of manganese to the content proportion of sulfur is 0.4 or greater.

7. The alloy electrolytic foil according to claim 3, wherein the ratio (R_{Ni/Fe}) of the content proportion of nickel to the content proportion of iron is 1.0 to 5.0.

8. The alloy electrolytic foil according to any one of claims 1 to 7, wherein a total content proportion of the iron and the nickel in the alloy electrolytic foil is 90% by weight or more.

9. A current collector for a battery, comprising:
the alloy electrolytic foil according to any one of claims 1 to 8.
